# EUROPÄISCHE PATENTSCHRIFT

(11) **EP 1 074 415 B1**
(45) Veröffentlichungstag und Bekanntmachung des Hinweises auf die Patenterteilung: **22.09.2004**
(21) Anmeldenummer: 00114591.1
(22) Anmeldetag: 07.07.2000
(51) Int. Cl.: B60J 7/14

(54) **Cabriolet-Fahrzeug**
Convertible vehicle
Véhicule cabriolet

(30) Priorität: 03.08.1999 DE 29913486 U
(43) Veröffentlichungstag der Anmeldung: 07.02.2001
(73) Patentinhaber: Wilhelm Karmann GmbH, D-49084 Osnabrück (DE)
(72) Erfinder: Rothe, Karl, 49597 Rieste (DE); Weissmüller, Olaf, 49565 Bramsche (DE)
(74) Vertreter: Busse & Busse Patentanwälte

(56) Entgegenhaltungen:
- DE-A- 19 642 152
- US-A- 5 810 422

## Beschreibung

Die Erfindung betrifft ein Cabriolet-Fahrzeug mit einem zumindest zwei separate Dachteile umfassenden Dach nach dem Oberbegriff des Anspruchs 1.

Aus der US-PS 2,812,975 ist ein Cabriolet-Fahrzeug bekannt, das mehrere feste Dachteile aufweist, die zur Öffnung gegeneinander parallel verfahren werden und in einer geschachtelten Stellung in die Fahrzeugkarosserie einlegbar sind. Hierbei sind sämtliche Dachteile an nur einem, auf beide Fahrzeugseiten verteilten Hauptlager angeordnet. Dieses muß daher die gesamte Last der Dachteile aufnehmen, die tragenden Gestängeteile sind entsprechend großdimensioniert auszuführen. Hiermit geht ein hohes Fahrzeuggewicht einher. Zudem ist für die Schwenkbewegung der Gesamteinheit nur ein Antriebsorgan an jeder Fahrzeugseite vorgesehen, das dementsprechend die gesamte Bewegung der Dachteile zu steuern hat und eine ebenfalls große Dimensionierung erfahren muß - mit den genannten Nachteilen. Weiterhin sind Antriebsorgane zwischen den Dachteilen nötig, um deren geschahtelte Ablage zu erreichen. Dies erfordert einen hohen Synchronisationsaufwand.

Die DE 196 42 152 A1 zeigt ein Cabriolet-Fahrzeug, bei dem eine erste bewegliche Einheit des Daches drei Dachteile und eine zweite bewegliche Einheit des Daches eine ablegbare Heckscheibe umfaßt. Die beiden beweglichen Einheiten sind voneinander baulich getrennt und weisen jeweils eigene Antriebsorgane auf. Hierbei ist problematisch, daß die Bewegungen der getrennten Baueinheiten nacheinander ausgeführt werden müssen, was die Öffnungs- bzw. Verschließzeit des Daches verlängert. Zudem ist durch die Ausbildung mehrerer Antriebsorgane das Fahrzeuggewicht ebenfalls erhöht. Hinzu kommt eine aufwendige Synchronisation der verschiedenen Antriebe, damit die Bewegungsabläufe ungestört voneinander ablaufen können.

Aus der gattungsgemäßen US-A 5 810 422 ist ein Cabriolet-Fahrzeug mit Dachteilen offenbart, die aus einem Hauptdachteil, aus einem sich daran anschließenden Übergangsdachteil und aus einer rückwärtigen Heckscheibe bestehen. Das mittlere Dachteil wird mit samt den Seitenscheiben abgesenkt. Dies erfolgt über seitliche Hauptgestängeteile, die an dem Hauptlager abgestützt sind. An diesen Hauptgestängeteilen greifen auch Antriebszylinder zum Auf- und Wegschwenken des Daches an. Während der Schwenkbewegung der Hauptgestängeteile wird über weitere mit diesen verbundene Gestängeteile die Heckscheibe mit versenkt. Das Hauptdachteil kann als oberseitiges Haubenelement in der offenen Position des Cabriolet-Fahrzeuges auf die abgesenkten anderen Dachteile abgelegt werden. Dazu ist noch ein Führungsgestänge beweglich angeordnet, das dazu dient, aufgrund der vorgesehenen Anlenkpunkte der Gestängeteile an dem Hauptdachteil eine Schwenkbewegungsführung dahingehend zu sichern, daß das Hauptdachteil in die abgesenkte Abdeckstellung auf der Karosserie aufgebracht werden kann. Die Hauptlager haben auch hier die gesamte Last des Daches zu tragen, so daß Lagerstellen als auch die Hauptgestängeteile entsprechend dimensioniert auszubilden sind.

Es ist Aufgabe der vorliegenden Erfindung, ein Cabriolet-Fahrzeug, insbesondere ein mit einer Rückbank versehenes Cabriolet-Fahrzeug, zu schaffen, das mehrere gegeneinander bewegliche separate Dachteile aufweist, wobei ein insgesamt geringes Gesamtgewicht und eine geringe Belastung von bewegten Teilen, insbesondere von Lagerstellen, erreicht werden soll.

Die Erfindung löst dieses Problem durch ein Cabriolet-Fahrzeug mit den Merkmalen des Anspruches 1. Hinsichtlich weiterer vorteilhafter Ausgestaltungen der Erfindung wird auf die Ansprüche 2 bis 12 verwiesen.

Mit der erfindungsgemäßen Aufteilung des Daches in mehrere Bewegungseinheiten ist erreicht, daß die den einzelnen Bewegungseinheiten zugeordneten Lager und Gestängeteile eine geringe Last aufzunehmen haben. Diese Teile können daher in kleinerer Dimensionierung mit entsprechender Gewichtsersparnis ausgeführt werden. Durch die mechanische Zwangskopplung der die jeweiligen Bewegungseinheit abstützenden Teile ist dennoch nur ein einziger Antrieb zur Bewegung sämtlicher Bewegungseinheiten erforderlich, da mit Krafteinleitung auf eine Bewegungseinheit zwangsweise eine Verlagerung auch einer weiteren bzw. der weiteren Bewegungseinheiten verbunden ist. Eine Synchronisation mehrerer Antriebe bzw. die Ausbildung mehrerer hinter einanderliegender Antriebsorgane auf einer Fahrzeugseite ist damit entbehrlich. Auch im manuellen Betrieb, bei dem der Antrieb durch einen Benutzer vorgenommen wird, bleiben die Vorteile bestehen, da dieser nur Kraft auf eine Bewegungseinheit ausüben und sich über die korrekte Abfolge des Ablegens oder Schiießens der Dachteile keine Gedanken machen muß. Eine Fehlbedienung ist ausgeschlossen. Die Zeit zum Öffnen oder Schließen des Daches ist gegenüber einer Einzelansteuerung der Dachteile verringert.

Bei Ausbildung von drei hintereinanderliegenden Dachteilen ist es unproblematisch möglich, auch ein vier- oder fünfsitziges Cabriolet-Fahrzeug mit einem erfindungsgemäßen Dach zu versehen, das dann die entsprechende Länge zur Überdeckung eines großen Insassenraumes aufweisen kann. Wenn die vorderen beiden Dachteile dabei zu einer Bewegungseinheit zusammengefaßt und über ein gemeinsames Hauptlager gehalten sind, kann der mechanische Aufwand für ein derartiges Cabriolet-Fahrzeug gering gehalten werden.

Die Verbindung der Bewegungseinheiten läßt sich einfach über mechanische Kopplungsglieder, beispielsweise eine Koppelstange, herstellen, die eine Zwangskopplung der den unterschiedlichen Bewegungseinheiten zugeordneten Leitgestängeteile bewirken. Das Gewicht ist durch die Kopplungsglieder nicht wesentlich erhöht, da sie als einfache Stahlprofile, Aluminiumprofile oder dergleichen ausgebildet sein können.

Wenn besonders vorteilhaft die beiden vorderen Dachteile über ein Viergelenk miteinander in Verbindung stehen, können sie in Parallelstellung zueinander abgelegt werden, so daß der Raumbedarf für das abgelegte Dach gering ist. Hierzu bedarf es keines gesonderten Antriebs zwischen den Dachteilen. Die Verlagerung der Dachteile gegeneinander ist besonders vorteilhaft durch ein weiteres Viergelenk unterstützt, das mit dem ersten als Gelenkkette zusammenwirkt. Der Raumbedarf des abgelegten Daches ist besonders gering, wenn die vorderen Dachteile in abgelegter Stellung parallel zu dem hinteren Dachteil in horizontaler Position im Fahrzeug aufbewahrt sind.

Weitere Vorteile und Merkmale der Erfindung ergeben sich aus einem nachfolgend geschilderten und in der Zeichnung dargestellten Ausführungsbeispiel des Gegenstandes der Erfindung.

In der Zeichnung zeigt:
- Fig. 1: eine abgebrochene schematische Seitenansicht eines erfindungsgemäßen Cabriolet-Fahrzeugs mit geschlossenem Dach,
- Fig. 2: eine ähnliche Ansicht wie Fig. 1 während der Öffnung des Daches,
- Fig. 2a: eine Detailansicht des Daches in der Öffnungsphase gemäß Fig. 2,
- Fig. 3: eine ähnliche Ansicht wie Fig. 2 bei weiter fortschreitender Öffnung des Daches,
- Fig. 4: das Cabriolet-Fahrzeug nach Fig. 3 mit im rückwärtigen Fahrzeugbereich abgelegten Dach.

Das im Ausführungsbeispiel gezeigte Cabriolet-Fahrzeug 1 weist eine Karosserie 2 sowie ein diese im Bereich eines Fahrgastinnenraums für vordere Insassen 3 bzw. hintere Insassen 4 überdeckendes Dach 5 auf. Das Dach 5 ist im Ausführungsbeispiel insgesamt dreiteilig ausgebildet und umfaßt die separaten Dachteile 6,7 und 8. Auch eine Aufteilung des Daches 5 in zwei oder mehr als drei Dachteile ist je nach Anforderungen des Fahrzeugs möglich.

Die Dachteile 6,7,8 können als insgesamt starre Dachteile, beispielsweise aus Kunststoff oder metallischem Werkstoff, ausgebildet sein. Auch ist es möglich, daß sie einen Rahmen oder dergleichen jeweils mit einem textilen Bezug überspannen. In jedem Fall sind separate Dachteile ausgebildet, die an Trennfugen 9,10 gegeneinander abgegrenzt sind.

Das Dach 5 ist insgesamt im rückwärtigen Bereich 11 der Karosserie 2, in dem sich beispielsweise ein Verdeckaufnahmekasten befindet, ablegbar.

Das Dach 5 ist in zwei Bewegungseinheiten 12,13 aufgegliedert, wobei die erste Bewegungseinheit 12 einem karosserieseitigen vorderen Hauptlager 14 und die zweite Bewegungseinheit 13 einem karosserieseitigen hinteren Hauptlager 15 zugeordnet ist. Beide Hauptlager 14,15 sind karosseriefest und durch eine Zwangskopplung 16, die in Gestalt einer Koppelstange ausgeführt ist, miteinander mechanisch verbunden.

Die vordere Bewegungseinheit 12 faßt die beiden vorderen Dachteile 6 und 7 zusammen, die hintere Bewegungseinheit 13 umfaßt das hintere Dachteil 8. Eine andere Zuordnung von Dachteilen und Bewegungseinheiten ist möglich. Der vorderen Bewegungseinheit 12 sind zwei Leitgestängeteile 17 und 18 zugeordnet, die die Dachteile 6 und 7 mit dem vorderen Hauptlager 14 verbinden.

Das Gestängeteil 17 geht dabei von einem karosseriefesten Drehpunkt 14a aus, das Gestängeteil 18 von einem ebenfalls karosseriefesten Drehpunkt 14b.

Die Leitgestängeteile 17,18 sind in ihrem dem Hauptlager 14 abgewandten Endbereich mit einem ersten Viergelenk 19 verbunden. Dieses ist gebildet durch randseitig über Gelenke 20,23 gehaltene und miteinander über Gelenke 21,22 verbundene Quergestängeteile 25a,25,25b für das vordere und mittlere Dachteil 6,7. Das Quergestängeteil 25b ist einstückig mit dem Leitgestängeteil 18 ausgebildet.

Der Leitgestängeteil 18 greift als Anlenkhebel für das mittlere Dachteil 7 an dem mittleren Dachteil 7 zugeordneten Gelenken 22 und 23 an, wobei das Gelenk 23 über einen Hebel 24 mit dem vorderen, dem vorderen Dachteil 6 zugeordneten Gelenk 20 in Verbindung steht. Der vordere Leitgestängeteil 17 greift als Steuerstange an einem die Gelenke 22 und 21 verbindenden Querhebel 25 an.

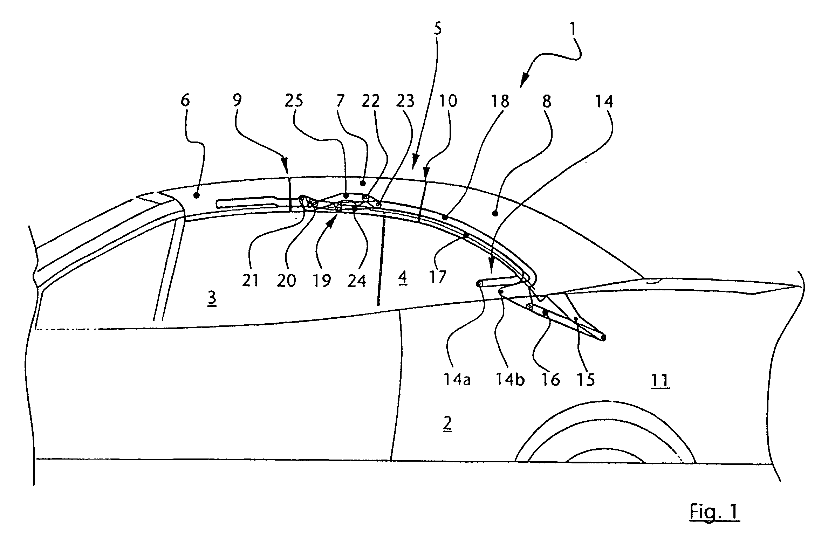

In geschlossener Stellung des Daches 5 (Fig. 1) liegen die Querhebel 24 und 25 des Viergelenks 19 im wesentlichen parallel voreinander, die Dachteile 6 und 7 sind hierbei ebenfalls parallel zueinander und miteinander fluchtend ausgerichtet.

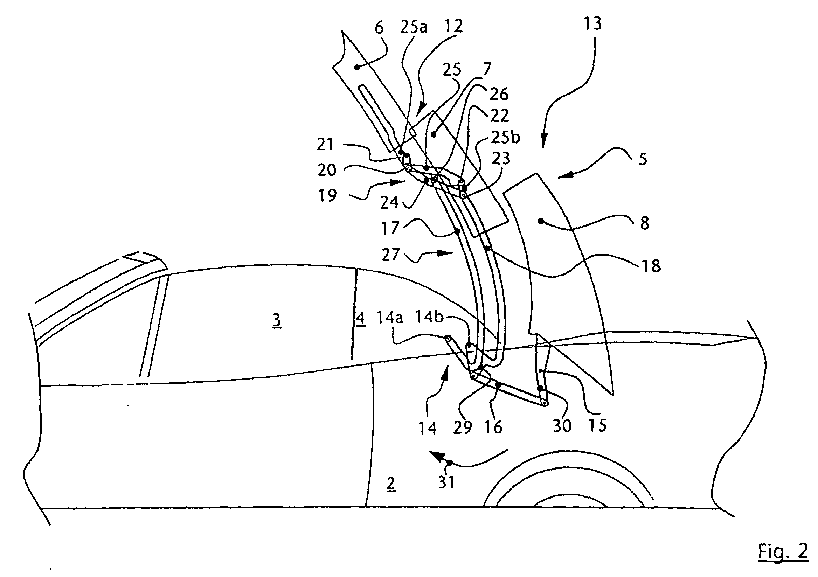

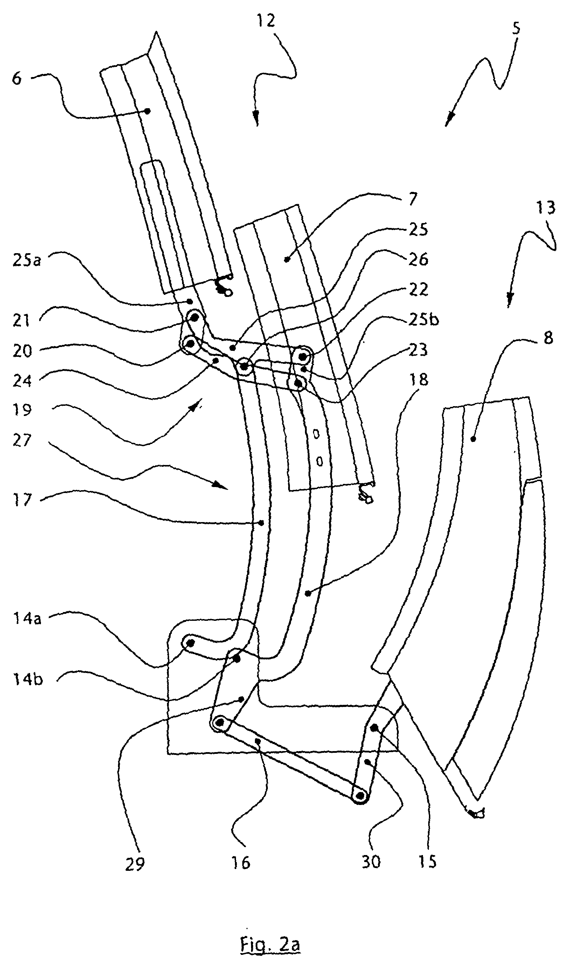

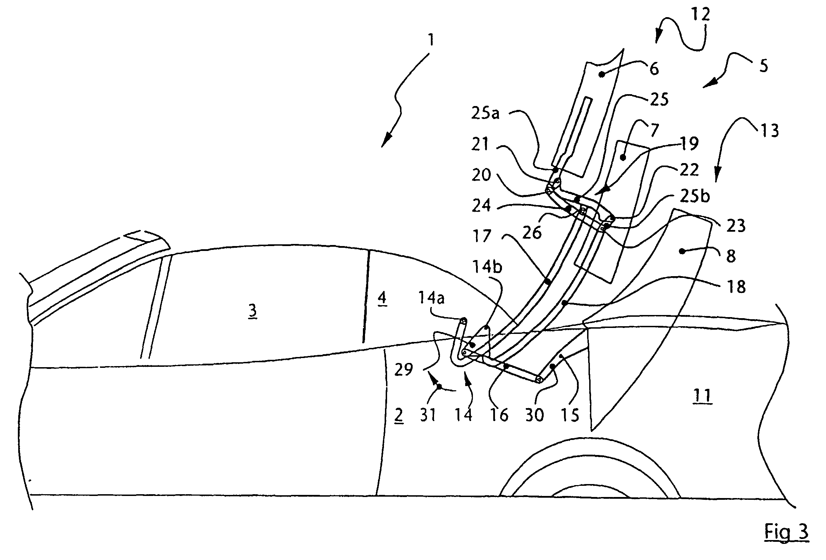

Während der Öffnung des Daches (Fig. 2, Fig. 3) wird durch den hinteren Leitgestängeteil 18 eine größere Zugkraft auf das Gelenk 23 ausgeübt als durch den vorderen Leitgestängeteil 17 auf den Querhebel 25. Dadurch werden die Teile 24 und 25 gegeneinander verschoben, mithin auch die Dachteile 6 und 7, die über die Öffnung des Viergelenks 19 in eine überlappende und voreinander liegende Parallelstellung verbracht werden.

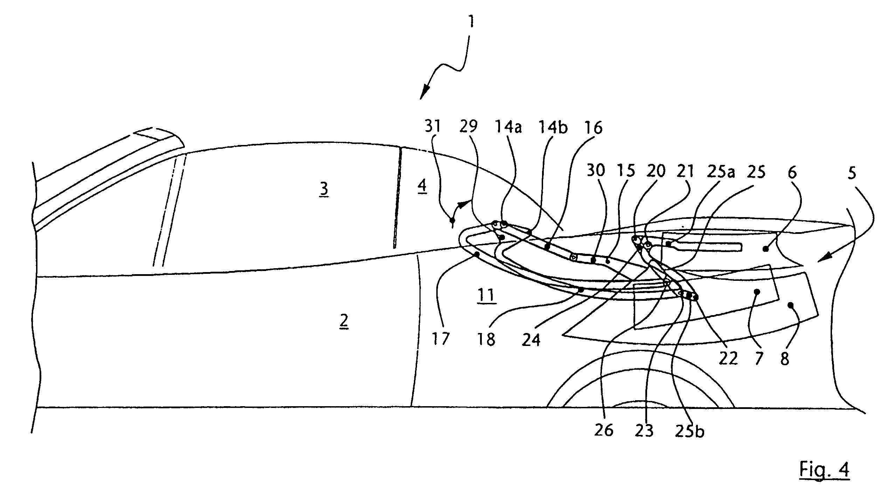

Durch die karosserieseitig an Lagerstellen 14a,14b angelenkten Leitgestängeteile 17,18 und das mit diesen an den Gelenken 26,22 verbundene Quergestängeteil 25 ist ein weiteres Viergelenk 27 ausgebildet, das mit dem ersten Viergelenk 19 als Gelenkkette zusammenwirkt und dessen Längshebel 17,18 sich ebenfalls während der Öffnung des Daches 5 zunächst auseinander bewegen. Die Voreinanderlagerung der Dachteile 6 und 7 wird hiermit weiter unterstützt, bei weiterer Ablage des Daches (Fig. 4) liegen die Dachteile 5,6 somit ineinandergeschachtelt und übereinander, wobei sie eine Wendung erfahren haben.

Insgesamt ist in der geöffneten Stellung des Daches 5 (Fig. 4) ein Paket von Dachteilen 6,7,8 gebildet, wobei die Dachteile 6 und 7 in der nach oben zeigenden Wölbung des ebenfalls gewendeten hinteren Dachteils 8 aufgenommen sind. Die Ablagekinematik wird dadurch unterstützt, daß an einem Ausleger 29 des um die Lagerstelle 14b schwenkenden Lenkgestängeteils 18 ein Kopplungsglied 16 mit einem Ausleger 30 des um die Lagerstelle 15 schwenkenden hinteren Dachteils 8 verbunden ist. Während der Öffnung der vorderen Dachteile 6,7 bewegt sich der Ausleger 29 in Richtung des Pfeils 31 um die Lagerstelle 14b des Hauptlagers 14. Dadurch wird eine Zugkraft auf das Kopplungsglied 16 ausgeübt, das somit den Ausleger 30 des hinteren, um die Lagerstelle 15 schwenkenden Dachteils 8 nach vorne bewegt und dieses zu einer gewendeten Horizontallage in den Verdeckkasten einschwenkt. Auch umgekehrt kann durch Krafteinleitung auf den Ausleger 30 des hinteren Dachteils 8 eine Schubbewegung über das als Koppelstange ausgebildete Kopplungsgiied 16 auf die vorderen Dachteile 6,7 ausgeübt werden. In jedem Fall muß die Krafteinleitung nur an einem der Ausleger bzw. Dachteile stattfinden, um die gesamte Öffnungs- und Schließkinematik des Daches 5 zu betätigen. Die Krafteinleitung kann sowohl manuell als auch über einen Antrieb (nicht eingezeichnet), beispielsweise einen Hydraulikzylinder, erfolgen. Als Kopplungsglied 16 ist hier eine einfache Koppelstange gewählt worden. Diese kann statt an dem Lenkgestängeteil 18 auch an dem Lenkgestängeteil 17 anmontiert werden. Die Koppelstange kann Zug- und Schubkräfte übertragen. Je nach Ausbildung des Antriebs kann es ausreichend sein, ein Kopplungsglied 16 nur zur Übertragung von Zugkräften vorzusehen, beispielsweise in Gestalt eines flexiblen Bandes.

Das Cabriolet-Fahrzeug 1 ist bezüglich seiner Verdeckmechanik insgesamt symmetrisch zu einer vertikalen Längsmittelebene ausgebildet, so daß die geschilderten Verhältnisse sich beidseits in der Karosserie 2 wiederfinden.

Sowohl bei manueller als auch bei automatischer Betätigung sind daher die eingangs genannten Vorteile einer geringen Gewichtsbelastung bei gleichzeitig mechanischer Entlastung von Lagern und tragenden Gestängeteilen erreicht.

An Stelle der beiden der vorderen Bewegungseinheit 12 zugeordneten Dachteile 6 und 7 und dem einen der hinteren Bewegungseinheit 13 zugeordneten hinteren Dachteil 8 können die Verhältnisse auch umgekehrt sein, oder es kann insgesamt ein zweiteiliges Dach ausgebildet sein, bei dem jeweils nur ein Dachteil eine Bewegungseinheit bildet. Auch ist möglich, daß sowohl die vordere als auch die hintere Bewegungseinheit jeweils zwei Dachteile umfaßt, so daß insgesamt ein vierteiliges Dach ausgebildet ist.

## Patentansprüche

1. Cabriolet-Fahrzeug (1) mit einem zumindest zwei separate Dachteile (6; 7; 8) umfassenden Dach, das im rückwärtigen Fahrzeugbereich ablegbar ist und hierzu über zumindest ein an der Fahrzeugkarosserie (2) angeordnetes Hauptlager abstützbar ist, **dadurch gekennzeichnet, daß** das Dach (5) zumindest zwei mit separaten Dachteilen (6; 7; 8) sowie mit Leitgestängeteilen (17; 18; 30) versehene Bewegungseinheiten (12; 13) aufweist, die jeweils an einem separaten karosserieseitigen Hauptlager (14, 14a, 14b; 15) schwenkbar abgestützt sind, wobei die Bewegungseinheiten (12, 13) über zumindest ein zwischen den Hauptlagern (14, 14a, 14b; 15) angeordnetes Kopplungsglied (16) miteinander derart gekoppelt sind, daß ihre Öffnungs- oder Schließbewegung mechanisch zwangssynchronisiert ist.

2. Cabriolet-Fahrzeug nach Anspruch 1, **dadurch gekennzeichnet, daß** für das Dach (5) zwei eine vordere (12) und eine hintere (13) Bewegungseinheit ausbildende Bewegungseinheiten vorgesehen sind.

3. Cabriolet-Fahrzeug nach einem der Ansprüche 1 oder 2, **dadurch gekennzeichnet, daß** das Dach (5) drei separate Dachteile (6;7;8) aufweist.

4. Cabriolet-Fahrzeug nach einem der Ansprüche 2 oder 3, **dadurch gekennzeichnet, daß** eine Bewegungseinheit (12) die vorderen beiden Dachteile (6;7) und eine weitere Bewegungseinheit (13) das hintere Dachteil (8) umfaßt.

5. Cabriolet-Fahrzeug nach einem der Ansprüche 1 bis 4, **dadurch gekennzeichnet, daß** zur Kopplung der Bewegungseinheiten eine Koppelstange (16) zwischen den Bewegungseinheiten (12;13) angeordnet ist.

6. Cabriolet-Fahrzeug nach einem der Ansprüche 1 bis 5, **dadurch gekennzeichnet, daß** zur Betätigung beider Bewegungseinheiten (12;13) ein einziges Antriebsorgan vorgesehen ist.

7. Cabriolet-Fahrzeug nach Anspruch 6, **dadurch gekennzeichnet, daß** der Antrieb hydraulisch ausgebildet ist.

8. Cabriolet-Fahrzeug nach einem der Ansprüche 3 bis 7, **dadurch gekennzeichnet, daß** die vorderen beiden Dachteile (6;7) jeweils ein zum vorderen Hauptlager (14) führendes Leitgestängeteil (17;18) aufweisen.

9. Cabriolet-Fahrzeug nach einem der Ansprüche 1 bis 8, **dadurch gekennzeichnet, daß** randseitig gelenkig gehaltene (20;23) und gelenkig verbundene (21;22) Quergestängeteile (25a;25;25b) für das vordere und mittlere Dachteil (6;7) ein Viergelenk (19) ausbilden und während der Öffnung des Daches (5) eine Parallelverlagerung der Dachteile (6;7) gegeneinander bewirken.

10. Cabriolet-Fahrzeug nach Anspruch 9, **dadurch gekennzeichnet, daß** die karosseriefest angelenkten (14a;14b) Leitgestängeteile (17;18) und das mit diesen gelenkig verbundene (26;22) Quergestängeteil (25) ein weiteres Viergelenk (27) ausbilden, das mit dem ersten Viergelenk (19) eine Gelenkkette ausbildet.

11. Cabriolet-Fahrzeug nach einem der Ansprüche 3 bis 10, **dadurch gekennzeichnet, daß** in abgelegter Stellung des Daches (5) das hintere Dachteil (8) in einer im wesentlichen horizontalen Lage gehalten ist und mit seinem in geschlossener Stellung des Daches nach oben weisenden Bereich nach unten zeigt.

12. Cabriolet-Fahrzeug nach Anspruch 11, **dadurch gekennzeichnet, daß** das vordere (6) und mittlere Dachteil (7) in abgelegter Stellung des Daches oberhalb des hinteren Dachteils (8) in geschachtelter Stellung gehalten sind.

## Claims

1. Convertible vehicle (1) having a roof comprising at least two separate roof parts (6; 7; 8), which roof can be stowed in the rear region of the vehicle and for this purpose can be supported by at least one main mounting arranged on the bodywork (2) of the vehicle, **characterised in that** the roof (5) has at least two units for movement (12; 13) which are provided with separate roof parts (6; 7; 8) and with directing-linkage parts (17; 18; 30), which units for movement (12; 13) are supported to pivot on respective separate main mountings (14, 14a, 14b; 15) at the bodywork, the units for movement (12, 13) being coupled together, by at least one coupling member (16) arranged between the main mountings (14, 14a, 14b; 15), in such a way that their opening or closing movement is positively synchronised mechanically.

2. Convertible vehicle according to claim 1, **characterised in that** two units for movement, forming one front unit for movement (12) and one rear unit for movement (13), are provided for the roof (5).

3. Convertible vehicle according to either of claims 1 and 2, **characterised in that** the roof (5) has three separate roof parts (6; 7; 8).

4. Convertible vehicle according to either of claims 2 and 3, **characterised in that** one unit for movement (12) comprises the front two roof parts (6; 7) and a further unit for movement (13) comprises the rear roof part (8).

5. Convertible vehicle according to one of claims 1 to 4, **characterised in that,** to couple the units for movement, a coupling bar (16) is arranged between the units for movement (12; 13).

6. Convertible vehicle according to one of claims 1 to 5, **characterised in that** a single drive member is provided to actuate both the units for movement (12; 13).

7. Convertible vehicle according to claim 6, **characterised in that** the drive is of a hydraulic form.

8. Convertible vehicle according to one of claims 3 to 7, **characterised in that** the front two roof parts (6; 7) have respective directing-linkage parts (17; 18) which run to the front main mounting (14).

9. Convertible vehicle according to one of claims 1 to 8, **characterised in that** transverse linkage parts (25a; 25; 25b) for the front and centre roof parts (6; 7), which transverse linkage parts (25a; 25; 25b) are hingeably held at the edge (20; 23) and are hingeably connected (21; 22), form a four-bar linkage (19) and, during the opening of the roof (5), cause the roof parts (6; 7) to be displaced towards one another in parallel positions.

10. Convertible vehicle according to claim 9, **characterised in that** the directing-linkage parts (17; 18), which are securely hinged (14a; 14b) to the bodywork, and the transverse linkage part (25) which is hingeably connected (26; 22) thereto, form a further four-bar linkage (27) which forms a linkage train with the first four-bar linkage (19).

11. Convertible vehicle according to one of claims 3 to 10, **characterised in that*,*** when the roof (5) is in the stowed position, the rear roof part (8) is held in a substantially horizontal position and the region thereof which points upwards when the roof is in the raised position points downwards.

12. Convertible vehicle according to claim 11, **characterised in that,** when the roof is in the stowed position, the front (6) and centre (7) roof parts are held above the rear roof part (8) in a nested position.

## Revendications

1. Véhicule cabriolet (1) comprenant un toit pourvu d'au moins deux éléments de toit distincts (6 ; 7 ; 8), toit qui peut être déposé dans la zone arrière du véhicule et y être supporté par au moins un palier principal disposé sur la carrosserie du véhicule (2)
**caractérisé en ce que**
le toit (5) présente au moins deux unités de déplacement (12 ; 13) prévues avec des éléments de toit (6 ; 7 ; 8) distincts ainsi qu'avec des éléments de tige conductrice (17 ; 18 ; 30), ces unités étant chacune supportées de manière pivotante sur un palier principal (14, 14a, 14b ; 15) distinct situé du côté de la carrosserie, les unités de déplacement (12, 13) étant accouplées ensemble par au moins un membre d'accouplement (16) disposé entre les paliers principaux (14, 14a, 14b ; 15) de telle sorte que leur mouvement d'ouverture ou de fermeture soit synchronisé sous contrainte mécanique.

2. Véhicule cabriolet selon la revendication 1,
**caractérisé en ce que**
deux unités de déplacement formant une unité de déplacement avant (12) et une arrière (13) sont prévues pour le toit (5).

3. Véhicule cabriolet selon l'une des revendications 1 ou 2,
**caractérisé en ce que**
le toit (5) présente trois éléments de toit distincts (6 ; 7 ; 8).

4. Véhicule cabriolet selon l'une des revendications 2 ou 3,
**caractérisé en ce qu'**
une unité de déplacement (12) comprend les deux éléments de toits avants (6 ; 7) et une autre unité de déplacement (13) comprend l'élément de toit arrière (8).

5. Véhicule cabriolet selon l'une des revendications 1 à 4,
**caractérisé en ce qu'**
une tige d'accouplement (16) est disposée entre les unités de déplacement (12 ; 13) pour accoupler les unités de déplacement.

6. Véhicule cabriolet selon l'une des revendications 1 à 5,
**caractérisé en ce qu'**
un seul organe d'entraînement est prévu pour actionner les deux unités de déplacement (12 ; 13).

7. Véhicule cabriolet selon la revendication 6,
**caractérisé en ce que**
l'entraînement est hydraulique.

8. Véhicule cabriolet selon l'une des revendications 3 à 7,
**caractérisé en ce que**
les deux éléments de toits avants (6 ; 7) présentent chacun un élément de tige directrice (17 ; 18) conduisant au palier principal avant (14).

9. Véhicule cabriolet selon l'une des revendications 1 à 8,
**caractérisé en ce que**
des éléments de tige transversale (25a ; 25 ; 25b) reliés de manière articulée (21 ; 22) et maintenus de manière articulée (20 ; 23) du côté du bord forment une articulation à quatre points (19) pour l'élément de toit avant et central (6 ; 7) et, pendant l'ouverture du toit (5), agissent l'un contre l'autre pour permettre un déplacement parallèle les éléments de toit (6 ; 7).

10. Véhicule cabriolet selon la revendication 9,
**caractérisé en ce que**
les éléments de tige directrice (17 ; 18) fixés de manière articulée sur la carrosserie (14a ; 14b) et l'élément de tige transversale (25) relié de manière articulée (26 ; 22) à ces éléments forment une autre articulation à quatre points (27) qui forme une chaîne articulée avec la première articulation à quatre points (19).

11. Véhicule cabriolet selon l'une des revendications 3 à 10,
**caractérisé en ce que**
lorsque le toit (5) est en position déposée, l'élément de toit arrière (8) est maintenu dans une position essentiellement horizontale et il est dirigé vers le bas avec sa zone dirigée vers le haut dans la position fermée du toit.

12. Véhicule cabriolet selon la revendication 11,
**caractérisé en ce que**
les éléments de toit avant (6) et central (7) sont maintenus en position superposée au-dessus de l'élément de toit arrière (8) lorsque le toit est en position déposée.
